# EUROPÄISCHE PATENTSCHRIFT

(11) **EP 2 491 843 B1**
(45) Veröffentlichungstag und Bekanntmachung des Hinweises auf die Patenterteilung: **19.06.2013**
(21) Anmeldenummer: 11401029.1
(22) Anmeldetag: 22.02.2011
(51) Int. Cl.: A47L 15/00

(54) **Verfahren zur Durchführung eines Spülprogramms, welches mindestens die Programmabschnitte Reinigen, Zwischenspülen und Klarspülen umfasst**
Method for performing a wash programme comprising at least the cleaning, mid-cycle rinse and final rinse program sections
Procédé d'exécution d'un programme de rinçage comprenant au moins les sections de programme de nettoyage, rinçage et rinçage final

(43) Veröffentlichungstag der Anmeldung: 29.08.2012
(73) Patentinhaber: Miele & Cie. KG, 33332 Gütersloh (DE)
(72) Erfinder: Marks, Volker, 33611, Bielefeld (DE)

(56) Entgegenhaltungen:
- EP-A2- 1 362 546
- EP-A2- 1 723 887
- EP-A2- 2 156 777
- DE-A1-102004 054 313
- DE-A1-102008 013 549

## Beschreibung

Die Erfindung betrifft ein Verfahren zur Durchführung eines Spülprogramms, welches mindestens die Programmabschnitte Reinigen, Zwischenspülen und Klarspülen umfasst, in einer Geschirrspülmaschine, bei welcher im Kreislauf in einem unteren Bereich eines Spülbehälters angesammelte Flüssigkeit mittels einer Umwälzpumpe zu Sprüheinrichtungen und von dort über Spülgut gefördert wird.

Eine Geschirrspülmaschine nach dem Stand der Technik besitzt einen in einem Gehäuse angeordneten Spülbehälter, welcher über eine mittels einer Tür verschließbare Beschickungsöffnung zugänglich ist. Innerhalb des Spülbehälters sind Körbe angeordnet, welche zu spülende Spülgüter aufnehmen. Zur Durchführung eines Spülprogramms wird in den Spülbehälter Wasser eingebracht, gegebenenfalls mit Spülzusätzen versehen als Spülflüssigkeit mittels einer Umwälzpumpe im Kreislauf umgewälzt und dabei über Spülgut gefördert. Die Geschirrspülmaschine weist im Bodenbereich des Spülbehälters einen Sammeltopf auf, welcher über einen Ansaugstutzen mit der Umwälzpumpe verbunden ist. Die Umwälzpumpe fördert in einem Kreislauf über Druckstutzen die Spülflüssigkeit zu innerhalb des Spülbehälters angeordneten Sprüheinrichtungen, von dort regnet die Spülflüssigkeit auf das Spülgut, tropft ab und läuft wieder in den Sammeltopf. Im Folgenden wird ein solcher Kreislauf als üblicher Umwälzbetrieb bezeichnet. Innerhalb des Kreislaufs ist eine Heizeinrichtung angeordnet, welche die Spülflüssigkeit in bestimmten Programmabschnitten erwärmt.

Ein Spülprogramm nach dem Stand der Technik umfasst mehrere Programmschritte, gegebenenfalls ein Vorspülen, ein Reinigen, ein Zwischenspülen, ein Klarspülen und gegebenenfalls ein Trocknen. Beim Reinigen wird das Wasser mit einem Spülmittel vermischt, erwärmt und das Spülgut damit beaufschlagt. Ein nachfolgendes Zwischenspülen hat die Aufgabe, innerhalb der Geschirrspülmaschine verbliebene Spülflüssigkeit, die sich aus Wasser, Spülmittel und Schmutzbestandteilen zusammensetzt, aus der Geschirrspülmaschine auszubringen. Dabei wird nach dem Entleeren der Flüssigkeit im Programmabschnitt Reinigen zum Beginn des Zwischenspülens neues Frischwasser eingefüllt und im Umwälzkreislauf auf das Spülgut gebracht. Eine Erwärmung der Flüssigkeit erfolgt im Zwischenspülen in der Regel nicht. Im nachfolgenden Klarspülen wird erneut eingefülltes Frischwasser mit Klarspülmittel versetzt, und dann wie im Reinigen erwärmt über das Spülgut verteilt.

Ein Nachteil des bekannten Zwischenspül-Programmabschnitts besteht darin, dass sowohl der Spülbehälter als auch das Spülgut im Zwischenspülen abgekühlt werden. Hierdurch geht die durch das Besprühen mit heißer Flüssigkeit im Reinigen gespeicherte Wärmekapazität wenigstens teilweise verloren. Dies ist von Nachteil, da diese Wärmemenge für die anschließende Erwärmung der Flüssigkeit beim Klarspülen wieder aufgebracht werden muss.

Aus der EP1362546A2 ist es darüber hinaus bekannt, nach dem Programmabschnitt Reinigen einen Programmabschnitt Siebreinigen vorzusehen, bei dem dem Sumpf des Geschirrspülers Spülflüssigkeit zugeführt und die Umwälzpumpe nicht in Betrieb genommen wird, so dass das Spülgut nicht mit Spülflüssigkeit beaufschlagt wird.

Es ist daher die Aufgabe der Erfindung, ein Verfahren zur Durchführung eines Spülprogramms der eingangs genannten Art dahingehend zu verbessern, dass Energie- und Wasserverbrauch optimiert und die Reinigungsleistung verbessert wird.

Erfindungsgemäß wird die Aufgabe durch ein Verfahren mit den Merkmalen des Anspruchs 1 gelöst. Dabei wird im Programmabschnitt Zwischenspülen dem Spülbehälter Flüssigkeit zugeführt, die bis zu ihrer Entleerung ohne Umwälzung über das Spülgut im unteren Bereich des Spülbehälters verbleibt. Der Kern der Erfindung besteht darin, dass während des Zwischenspülens auf einen üblichen Umwälzbetrieb vollständig verzichtet wird. Hierdurch wird ein Kontakt des Spülguts mit kaltem Wasser vermieden, beim Spülbehälter ist er auf den unteren Bereich beschränkt. So bleibt einerseits die beim Reinigen im Spülbehälter und im Spülgut gespeicherte Wärmeenergie größtenteils erhalten und wird im Klarspülen auf die Flüssigkeit übertragen, andererseits wird auch noch Wasser eingespart, da nun nicht mehr die für einen üblichen Umwälzbetrieb notwendige Flüssigkeitsmenge im Sammeltopf bereitgestellt werden muss. Versuche der Anmelderin haben gezeigt, dass nach dem Abpumpen am Ende des Reinigens dennoch ein nennenswerter Anteil an Spülflüssigkeit in Hohlräumen des Sammeltopfes und/oder der Umwälzpumpe verbleibt.

Der Verzicht auf einen üblichen Umwälzbetrieb wird in einfachster Weise dadurch erreicht, dass lediglich ein Frischwasserzulauf in den unteren Bereich des Spülbehälters bzw. in den Sammeltopf erfolgt und dieses Wasser nach einer Einwirkzeit entleert wird. Dabei wird im Programmabschnitt Zwischenspülen eine Flüssigkeitsmenge zugeführt und/oder die Drehzahl der Umwälzpumpe derart reduziert, dass eine Förderung der Flüssigkeit zu den Sprüheinrichtungen unterbleibt. Wenn nur die zugeführte Frischwassermenge reduziert wird, arbeitet die Umwälzpumpe im Schlürfbetrieb, d. h., sie saugt Luft an. Dadurch wird eine Flüssigkeitsäule aufgebaut, welche nicht bis an die Sprüheinrichtungen reicht. Der gleiche Effekt kann durch Verringerung der Drehzahl der Umwälzpumpe oder durch Kombination der beiden Maßnahmen erreicht werden. Dann kann das Schlürfen verhindert werden, weil die angesaugte Flüssigkeitsmenge bei einer geringeren Pumpendrehzahl nicht mehr so groß ist.

Wenn eine Wasserweiche zur wahlweisen Ansteuerung einer von mehreren Sprüheinrichtungen vorhanden ist, ist es zweckmäßig, die höher gelegene Sprüheinrichtung anzusteuern. Ein Flüssigkeitsaustritt aus dieser Sprüheinrichtung benötigt einen höheren Druck und ist deshalb einfacher zu unterbinden. Durch das Einschalten der Umwälzpumpe werden sowohl deren Pumpenkammer als auch die unteren Bereiche der Zuleitungen zu den Sprüheinrichtungen ausgespült und von Restspülflüssigkeit befreit.

Um ein dauerhaftes Luftansaugen zu vermeiden ist es vorteilhaft, wenn im Programmabschnitt Zwischenspülen im Spülbehälter wenigstens eine solche Flüssigkeitsmengemenge vorgehalten wird, dass der Flüssigkeitsspiegel oberhalb der Ansaugstutzenöffnung der Umwälzpumpe liegt.

Ein Entleeren der im Spülbehälter befindlichen Flüssigkeit zum Ende des Programmabschnitts Reinigen sorgt dafür, dass das neu hinzugekommene Frischwasser die vorhandene Restspülflüssigkeit stärker verdünnt. Die Spülwirkung wird noch mehr verbessert, wenn mindestens zweimal Flüssigkeit zum Spülbehälter zugeführt, umgewälzt und anschließend entleert wird.

Eine weitere Verbesserung der Entfernung von Restspülflüssigkeit wird erreicht, wenn vor dem vollständigen Abpumpen am Ende des Programmabschnitts Reinigen oder zu Beginn des Programmabschnitts Zwischenspülen eine Abtropfpause durchgeführt wird, bei welcher eine Umwälzung von Flüssigkeit unterbleibt. Eine solche Pause sollte mindestens eine Minute, insbesondere zwischen zwei und fünf Minuten, vorzugsweise zwischen zwei und drei Minuten dauern. Dadurch kann die am Spülgut anhaftende Spülflüssigkeit mit dem gelösten Spülmittel und Schmutzbestandteilen nahezu vollständig mit der Reinigungsflotte entleert werden.

Es ist besonders vorteilhaft, wenn vor der Abtropfpause der Spülflüssigkeit ein Klarspülmittel zudosiert wird. Hierdurch wird das Abtropfverhalten verbessert.

Weitere Vorteile und Merkmale der Erfindung ergeben sich aus der nachfolgenden Beschreibung. Dabei zeigt die Figur schematisch einen Querschnitt durch eine Geschirrspülmaschine.

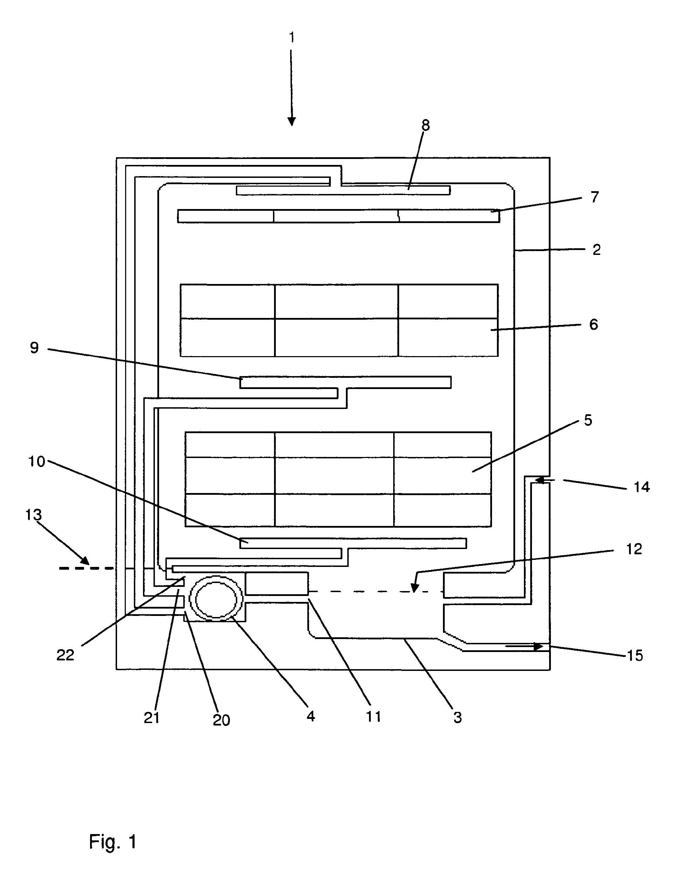

Die Fig. 1 zeigt eine Geschirrspülmaschine 1. Innerhalb der Geschirrspülmaschine 1 ist ein Spülbehälter 2 angeordnet, an welchen sich bodenseitig ein Sammeltopf 3 anschließt. Im Spülbehälter 2 sind zwei Körbe 5 und 6 und eine Besteckschublade 7 angeordnet, welche zur Aufnahme von nicht dargestelltem Spülgut dienen. Der Spülbehälter 2 ist über eine Beschickungsöffnung der Geschirrspülmaschine 1 von außerhalb zugänglich, wobei die Beschickungsöffnung mittels einer nicht dargestellten Tür fluiddicht verschließbar ist.

Die Geschirrspülmaschine 1 weist einen Wassereinlass 14 und einen Flüssigkeitsauslass 15 auf. Der Einlass 14 steht in Fluidverbindung mit einer nicht gezeigten Frischwasserquelle. Der Auslass 15 kann eine ebenfalls nicht gezeigte Entleerungspumpe aufweisen, welche geeignet ist, Flüssigkeit aus dem Spülbehälter 2 auszubringen. Alternativ kann die Entleerung des Spülbehälters über ein Ventil (nicht dargestellt) mittels Schwerkraft erfolgen.

Im Sammeltopf 3 sammelt sich das in den Spülbehälter 2 eingebrachte Spülwasser. Der Sammeltopf 3 ist mittels eines Ansaugstutzens 11 mit einer Umwälzpumpe 4 fluidtechnisch verbunden. Die Umwälzpumpe 4 weist einen oder mehrere Auslässe 20, 21 und 22 auf, mittels welcher in einem Umwälzbetrieb drei Sprüheinrichtungen, beispielsweise drehbare Sprüheinrichtungen 8, 9 und 10 mit Flüssigkeit beaufschlagbar sind. Zur Verteilung auf einzelne Sprüheinrichtungen kann die Umwälzpumpe 4 auch eine nicht dargestellte Wasserweiche umfassen. Mit einer solchen Geschirrspülmaschine wird das nachfolgend beschriebene erfindungsgemäße Verfahren durchgeführt:

Im Programmabschnitt Reinigen, dem gegebenenfalls ein programmabschnitt Vorspülen vorgeschaltet sein kann, wird dem Spülbehälter Frischwasser zugeführt, mit Reinigungsmittel gemischt und mittels der Umwälzpumpe zu den Sprüheinrichtungen gefördert. Dies kann in bekannter Weise mit wechselnder Ansteuerung der Sprüheinrichtungen erfolgen. Während des Umwälzbetriebs wird die Flüssigkeit bis zu einer programmabhängig vorgegebenen Temperatur erwärmt und anschließend für eine weitere, sogenannte Haltezeit weiter umgewälzt. Zum Ende des Programmabschnitts Reinigen wird zunächst aus einer nicht dargestellten Dosiereinrichtung Klarspüler zudosiert und umgewälzt. Die dosierte Menge kann annähernd identisch zu der Menge sein, welche im Klarspülprogrammabschnitt zudosiert wird. In Programmen, welche speziell für die Verwendung von Klarspülmittel enthaltenden Reinigungstabs ausgelegt sind, kann auf die Klarspülmitteldosierung verzichtet werden. Hier enthält die Reinigungsflotte bereits ein solches Mittel aus den Tabs. Anschließend wird eine Abtropfpause ohne Umwälzbetrieb durchgeführt. Die Pause dauert mindestens eine Minute, insbesondere zwischen zwei und fünf Minuten. Versuche haben gezeigt, dass eine Pause zwischen zwei und drei Minuten optimal ist, um das Spülgut nahezu vollständig von Spülflüssgkeitsresten zu befreien. Im Anschluss an die Abtropfpause wird der Spülbehälter entleert und das Reinigen ist beendet.

Es schließt sich der Programmabschnitt Zwischenspülen an. Die Abtropfpause könnte theorethisch auch nach dem Entleeren des Spülbehälters und demzufolge zu Beginn des Zwischenspülens durchgeführt werden, dabei würde jedoch die abgetropfte Restspülflüssigkeit im Sammeltopf verbleiben und demzufolge schlechter verdünnt. Im Zwischenspülen erfolgt eine erneute Zufuhr von Frischwasser, dann wird die Umwälzpumpe eingeschaltet. Das nicht dargestellte Laufrad der Umwälzpumpe beginnt nun damit, das bereitgestellte Wasser zu den nachgeschalteten Sprüheinrichtungen zu fördern. Dabei sind die Flüssigkeitsmenge und/oder die Drehzahl der Umwälzpumpe derart bemessen, dass die aufgebaute Flüssigkeitssäule 13 nicht bis an die Sprüheinrichtungen reicht, aber dass der Flüssigkeitsspiegel 12 im Sammeltopf oberhalb des Ansaugstutzens der Umwälzpumpe liegt. Wenn eine Wasserweiche zur wahlweisen Ansteuerung einer von mehreren Sprüheinrichtungen vorhanden ist, ist es zweckmäßig, eine der höher gelegenen Sprüheinrichtung anzusteuern. Ein Flüssigkeitsaustritt aus dieser Sprüheinrichtung benötigt einen höheren Druck bzw. eine größere bereitgestellte Wassermenge und ist deshalb einfacher zu unterbinden. Da die Wassermengen aber bewusst nicht ausreichen, einen stabilen Pumpenlauf sicherzustellen, gelangt das in Bewegung gesetzte Wasser nicht zu den entsprechenden Sprüheinrichtungen. Nach einem kurzzeitigen Betrieb der Umwälzpumpe wird diese wieder abgeschaltet. Die aufgebauten Wassersäulen fallen wieder in sich zusammen und sorgen somit für eine zusätzliche Durchspülung des Pumpengehäuses und auch des Sammeltopfes in umgekehrter Richtung. Somit werden lediglich der Sammeltopf, die Umwälzpumpe mit ihren Auslässen und der untere Bereich der Zuleitungen zu den Sprüheinrichtungen ausgespült. Im Anschluss wird der Spülbehälter entleert. Der vorbeschrieben Vorgang - Wasser einfüllen, Umwälzpumpe ein- und wieder ausschalten, Entleeren - kann einmal oder mehrmals wiederholt werden.

Mit dem letzten Entleeren ist das Zwischenspülen beendet. Es schließt sich das aus dem Stand der Technik bekannte Klarspülen an.

## Patentansprüche

1. Verfahren zur Durchführung eines Spülprogramms, welches mindestens die Programmabschnitte Reinigen, Zwischenspülen und Klarspülen umfasst, in einer Geschirrspülmaschine (1), bei welcher im Kreislauf in einem unteren Bereich eines Spülbehälters (2) angesammelte Flüssigkeit mittels einer Umwälzpumpe (4) zu Sprüheinrichtungen (8, 9, 10) und von dort über Spülgut gefördert wird, wobei im Programmabschnitt Zwischenspülen dem Spülbehälter (2) Flüssigkeit zugeführt wird, die bis zu ihrer Entleerung ohne Umwälzung über das Spülgut im unteren Bereich des Spülbehälters (2) verbleibt,
**dadurch gekennzeichnet,**
**dass** im Programmabschnitt Zwischenspülen eine derart bemessene Flüssigkeitsmenge zugeführt und/oder die Drehzahl der Umwälzpumpe (4) derart reduziert wird, dass eine Förderung der Flüssigkeit zu den Sprüheinrichtungen (8, 9, 10) durch die eingeschaltete Umwälzpumpe (4) unterbleibt.

2. Verfahren nach Anspruch 1,
**dadurch gekennzeichnet,**
**dass** im Programmabschnitt Zwischenspülen im Spülbehälter (2) wenigstens eine solche Flüssigkeitsmenge vorgehalten wird, dass der Flüssigkeitsspiegel (12) oberhalb des Ansaugstutzens (11) der Umwälzpumpe (4) liegt.

3. Verfahren nach einem der vorangehenden Ansprüche,
**dadurch gekennzeichnet,**
**dass** zum Ende des Programmabschnitts Reinigen die im Spülbehälter (2) befindliche Flüssigkeit entleert wird.

4. Verfahren nach einem der vorangehenden Ansprüche,
**dadurch gekennzeichnet,**
**dass** im Programmabschnitt Zwischenspülen folgende Schritte mindestens zweimal ausgeführt werden:
- Zuführen der Flüssigkeitsmenge zum Spülbehälter (2),
- Betreiben der Umwälzpumpe (4),
- Entleeren der Flüssigkeitsmenge aus dem Spülbehälter (2).

5. Verfahren nach Anspruch 4,
**dadurch gekennzeichnet,**
**dass** das Entleeren der Flüssigkeitsmenge aus dem Spülbehälter (2) bei eingeschalteter Umwälzpumpe (4) erfolgt.

6. Verfahren nach mindestens einem der vorhergehenden Ansprüche,
**dadurch gekennzeichnet,**
**dass** am Ende des Programmabschnitts Reinigen oder zu Beginn des Programmabschnitts Zwischenspülen eine Abtropfpause durchgeführt wird, bei welcher eine Umwälzung von Flüssigkeit unterbleibt.

7. Verfahren nach Anspruch 6,
**dadurch gekennzeichnet,**
**dass** die Abtropfpause mindestens eine Minute, insbesondere zwischen zwei und fünf Minuten, vorzugsweise zwischen zwei und drei Minuten dauert.

8. Verfahren nach einem der Ansprüche 6 oder 7,
**dadurch gekennzeichnet,**
**dass** die Abtropfpause vor der Entleerung der Flüssigkeit im Programmabschnitt Reinigen durchgeführt wird.

9. Verfahren nach Anspruch 8,
**dadurch gekennzeichnet,**
**dass** vor der Abtropfpause der Spülflüssigkeit ein Klarspülmittel zudosiert wird.

## Claims

1. Method for performing a rinsing program, which comprises at least the program portions of cleaning, intermediate rinsing and final rinsing, in a dishwasher (1) in which liquid collected in a lower region of a rinsing container (2) in the circuit is conveyed by means of a circulating pump (4) to spray devices (8, 9, 10) and from there over goods to be rinsed, liquid being fed to the rinsing container (2) in the program portion of intermediate rinsing and remaining in the lower region of the rinsing container (2) until it is evacuated without circulation over the goods to be rinsed, **characterised in that**, in the program portion of intermediate rinsing, an amount of liquid is fed which is calculated in such a way and/or the rotational speed of the circulating pump (4) is reduced in such a way that the liquid is not conveyed to the spray devices (8, 9, 10) by the switched-on circulating pump (4).

2. Method according to claim 1, **characterised in that**, in the program portion of intermediate rinsing, at least such an amount of liquid is provided in the rinsing container (2) that the liquid level (12) is above the intake port (11) of the circulating pump (4).

3. Method according to any of the preceding claims, **characterised in that**, at the end of the program portion of cleaning, the liquid in the rinsing container (2) is evacuated.

4. Method according to any of the preceding claims, **characterised in that**, in the program portion of intermediate rinsing, the following steps are performed at least twice:
- feeding the amount of liquid to the rinsing container (2),
- operating the circulating pump (4),
- evacuating the amount of liquid from the rinsing container (2).

5. Method according to claim 4, **characterised in that** the amount of liquid is evacuated from the rinsing container (2) when the circulating pump (4) is switched on.

6. Method according to any of the preceding claims, **characterised in that**, at the end of the program portion of cleaning or at the start of the program portion of intermediate rinsing, a draining interval is performed in which there is no circulation of liquid.

7. Method according to claim 6, **characterised in that** the draining interval lasts at least one minute, in particular between two and five minutes, preferably between two and three minutes.

8. Method according to either claim 6 or claim 7, **characterised in that** the draining interval is performed prior to the evacuation of the liquid in the program portion of cleaning.

9. Method according to claim 8, **characterised in that** a rinse aid is added to the rinsing liquid prior to the draining interval.

## Revendications

1. Procédé de réalisation d'un programme de lavage qui comprend au moins les cycles de nettoyage, rinçage intermédiaire et rinçage, dans un lave-vaisselle (1) dans lequel, dans une zone inférieure d'une cuve de lavage (2), du liquide accumulé dans le circuit est acheminé, au moyen d'une pompe de circulation (4), vers des dispositifs de pulvérisation (8, 9, 10) et, de là, sur les articles à laver, du liquide étant, dans le cycle de rinçage intermédiaire, conduit à la cuve de lavage (2) et demeurant sur les articles à laver dans la zone inférieure de la cuve de lavage (2) jusqu'à sa vidange sans circulation,
**caractérisé en ce que**,
dans le cycle de rinçage intermédiaire, une quantité de liquide dimensionnée de telle sorte est conduite et/ou la vitesse de rotation de la pompe de circulation (4) est réduite de telle sorte qu'il ne se produit pas d'acheminement du liquide aux dispositifs de pulvérisation (8, 9, 10) par la pompe de circulation (4) qui est mise en circuit.

2. Procédé selon la revendication 1,
**caractérisé en ce que**
dans le cycle de rinçage intermédiaire, il est conservé dans la cuve de lavage (2) au moins une quantité de liquide telle que le niveau de liquide (12) est situé au-dessus de la tubulure d'aspiration (11) de la pompe de circulation (4).

3. Procédé selon une des revendications précédentes,
**caractérisé en ce que**,
à la fin du cycle de nettoyage, le liquide situé dans la cuve de lavage (2) est vidé.

4. Procédé selon une des revendications précédentes,
**caractérisé en ce que**,
dans le cycle de rinçage intermédiaire, les étapes suivantes sont effectuées au moins deux fois :
- transport de la quantité de liquide vers la cuve de lavage (2),
- fonctionnement de la pompe de circulation (4),
- vidange de la quantité de liquide à partir de la cuve de lavage (2).

5. Procédé selon la revendication 4,
**caractérisé en ce que**
la vidange de la quantité de liquide à partir de cuve de lavage (2) s'effectue alors que la pompe de circulation (4) est en circuit.

6. Procédé selon au moins une des revendications précédentes,
**caractérisé en ce que**,
à la fin du cycle de nettoyage ou au début du cycle de rinçage intermédiaire, une pause pour égouttage est effectuée au cours de laquelle il ne se produit pas de circulation du liquide.

7. Procédé selon la revendication 6,
**caractérisé en ce que**
la pause pour égouttage dure au moins une minute, en particulier entre deux et cinq minutes, de préférence entre deux et trois minutes.

8. Procédé selon une des revendications 6 ou 7,
**caractérisé en ce que**
la pause pour égouttage est effectuée avant la vidange du liquide dans le cycle de nettoyage.

9. Procédé selon la revendication 8,
**caractérisé en ce que**,
avant la pause pour égouttage, un produit de rinçage est ajouté au liquide de lavage.
